# FASCICULE DE BREVET EUROPEEN

(11) **EP 0 418 167 B1**
(45) Date de publication et mention de la délivrance du brevet: **30.11.1994**
(21) Numéro de dépôt: 90402543.4
(22) Date de dépôt: 14.09.1990
(51) Int. Cl.: H02G 3/06

(54) **Eclisse rapide pour chemin de câble en fils soudés**
Schnellverbinder für verlotete Kabelrinne aus Metalldrahtgitter
Quick joint for soldered wire cableduct

(30) Priorité: 15.09.1989 FR 8912099
(43) Date de publication de la demande: 20.03.1991
(73) Titulaire: KRIEG ET ZIVY INDUSTRIES, F-92100 Boulogne-Billancourt (FR)
(72) Inventeur: Vimard, Jean, F-60610 La Croix Saint-Ouen (FR); Deciry, James, F-60200 Compiègne (FR)
(74) Mandataire: CABINET BONNET-THIRION

(56) Documents cités:
- FR-A- 2 208 219
- FR-A- 2 590 736
- FR-A- 2 611 830

## Description

La présente invention concerne d'une manière générale les chemins de câble en fils soudés.

Ainsi qu'on le sait, ces chemins de câble sont formés par une pluralité de fils transversaux à profil en U, qui, disposés parallèlement les uns aux autres, à distance les uns des autres, suivant en pratique un pas régulier, sont reliés les uns aux autres, en pratique par soudage, par une pluralité de fils longitudinaux, qui, parallèles les uns aux autres, sont convenablement répartis le long de leur profil.

Ces chemins de câble étant en pratique réalisés tronçon par tronçon, l'un des problèmes à résoudre, dans leur mise en oeuvre, tient à la nécessité qu'il y a d'assembler, bout à bout, de place en place, de tels tronçons, pour assurer la continuité physique et mécanique de l'ensemble.

Dans le brevet français publié sous le No 2.208.219, il a été proposé de mettre en oeuvre, pour ce faire, des éclisses qui, rigides dans leur partie centrale, sont élastiques dans leurs parties d'extrémité, ces dites parties d'extrémité étant conformées en U pour pouvoir s'encliqueter sur des fils transversaux de l'un et de l'autre des deux tronçons de chemin de câble à abouter.

Bien que pouvant donner satisfaction, ces éclisses présentent de nombreux inconvénients, qui sont les suivants.

Tout d'abord, elles doivent impérativement être réalisées en un matériau élastique, et, en pratique, en acier à ressort.

Elles nécessitent donc, après leur découpe, un traitement thermique particulier, puis un traitement de surface, et, de ce fait, elles sont relativement coûteuses.

En outre, leur mise en place, in situ, sur un chantier, n'est pas aussi aisée que pourrait le laisser espérer leur élasticité.

En effet, il faut, pour cette mise en place, bander l'une et l'autre de leurs parties d'extrémité, et, conjointement, lorsque, comme cela est le cas en pratique, leur partie centrale présente un crochet, il faut engager ce crochet sur les fils transversaux d'extrémité des deux tronçons de chemin de câble à relier.

En pratique, ces opérations supposent de manière quasi impérative la mise en oeuvre d'un outil annexe spécifique, et celui-ci doit nécessairement être mis en oeuvre de l'intérieur des tronçons de chemin de câble à relier, au détriment de son maniement.

Les éclisses à parties d'extrémité élastiques en cause ont encore pour inconvénient de ne correspondre qu'à une distance bien déterminée pour les fils transversaux des tronçons de chemin de câble à relier sur lesquels ces parties d'extrémité doivent s'encliqueter, ce qui nécessite une coupe relativement précise de ces tronçons de chemin de câble, et de ne pas pouvoir se satisfaire de n'importe quel diamètre pour ces fils transversaux, la conformation en U de leurs dites parties d'extrémité n'étant réellement bien adaptée qu'à un diamètre déterminé pour ceux-ci.

Elles ont encore pour inconvénient un maintien relativement incertain, puisque ce maintien se fait par simple élasticité.

Elles ont enfin pour inconvénient de conduire à la présence de saillies relativement agressives au sein du volume interne des tronçons de chemin de câble qu'elles relient, au détriment, éventuellement, de l'intégrité des câbles logés dans ceux-ci, ces saillies étant formées par l'extrémité de leurs parties d'extrémité élastiques, et, le cas échéant, par le crochet de leur partie centrale.

Dans le brevet français publié sous le No 2 590 736, il est décrit une éclisse comportant, en saillie, au moins deux languettes, qui sont allongées longitudinalement à distance l'une de l'autre, et dont chacune est au moins théoriquement "pliable", et est ainsi propre à son agrafage par sertissage sur un fil transversal d'un des deux tronçons de chemin de câble à assembler bout à bout, dans la mesure où l'une est effectivement pliée au terme d'un tel assemblage et où l'une et l'autre sont en un même matériau.

Mais, dans cette demande de brevet français, les languettes interviennent chacune respectivement aux extrémités de l'éclisse, en prolongeant chacune localement celle-ci.

Il en résulte que le fil transversal sur lequel chacune est engagée ne se trouve au mieux entouré que sur une portion de sa section.

Il en résulte également que ces languettes s'étendent longitudinalement en sens opposés, ce qui complique la mise en place de l'éclisse, cette mise en place comportant en pratique une phase d'accrochage, une phase de rotation, et une phase d'encliquetage, avant le sertissage final de l'une des languettes.

La présente invention a tout d'abord pour objet une éclisse avantageusement exempte de ces inconvénients.

Elle a encore pour objet un procédé pour la mise en place de cette éclisse, et un outil propre à faciliter, si désiré, cette mise en place.

D'une manière générale, l'éclisse suivant l'invention est du genre comportant, en saillie, au moins deux languettes pliables, qui sont allongées longitudinalement, à distance l'une de l'autre, et dont chacune est propre à son agrafage, par sertissage, sur un fil transversal d'un des deux tronçons de chemin de câble à assembler bout à bout, et elle est caractérisée en ce que chacune des languettes pliables qu'elle présente est établie au droit d'un évidement propre à son repliement.

Ainsi, suivant l'invention, il est procédé par agrafage, et non pas par encliquetage.

Il en résulte, tout d'abord, que, de manière particulièrement économique, l'éclisse suivant l'invention peut avantageusement venir directement de forge, en étant par exemple découpée dans une bande d'acier doux, qui, si nécessaire, est protégée dès l'origine.

Elle peut aussi être par exemple en acier galvanisé ou en acier inoxydable.

Elle peut également être en aluminium.

L'éclisse suivant l'invention ne nécessite donc, en pratique, aucun traitement thermique, ni aucun traitement de surface après sa découpe.

L'éclisse suivant l'invention est en outre particulièrement aisée à mettre en oeuvre.

Il suffit, en effet, pour cela, de l'appliquer de l'extérieur contre les tronçons de chemin de câble à assembler, de la faire coulisser longitudinalement le long de ceux-ci jusqu'à engagement de ses languettes pliables sur des fils transversaux de ces tronçons de chemin de câble, et de sertir ces languettes pliables autour de ces fils transversaux.

En pratique, un tournevis, ou un outil de même type, peut suffire à ce sertissage.

Mais, si désiré, il peut être mis en oeuvre, pour son exécution, un outil spécifique, tel que selon la revendication 10, de nature à faciliter l'opération correspondante, et celui-ci peut indifféremment être mis en oeuvre de l'intérieur ou de l'extérieur des tronçons de chemin de câble à relier, ce qui en facilite le maniement.

L'éclisse suivant l'invention a encore pour avantage de permettre de rattraper d'éventuelles différences de coupe pour les tronçons de chemin de câble à assembler, leurs languettes pliables venant directement se façonner sur les fils transversaux concernés de ceux-ci et se satisfaisant donc d'éventuelles tolérances sur l'implantation relative de ces fils transversaux, et de se prêter, également, pour les mêmes raisons, à n'importe quel diamètre pour ces fils transversaux.

Tout en étant démontable, voire même réutilisable, l'éclisse suivant l'invention a enfin pour avantage une tenue irréprochable sur les tronçons de chemin de câble qu'elle relie, cette tenue résultant de manière positive de leur agrafage sur ceux-ci.

En effet, du fait que les languettes pliables s'étendent chacune au droit d'un évidement permettant leur repliement, chacun des fils transversaux sur lesquels sont engagées ces languettes pliables se trouve avantageusement entouré sur la quasi totalité de sa section, d'un côté par une telle languette pliable, de l'autre côté par la partie courante de l'éclisse.

Certes, il est décrit, dans le brevet français publié sous le No 2 611 830, une éclisse comportant à distance l'une de l'autre au moins deux languettes dont chacune est établie au droit d'un évidement.

Mais cette éclisse concerne l'assemblage de tronçons de chemin de câble en tôle, et il n'est donc pas question de tirer profit de ses évidements pour assurer un repliement des languettes, ce repliement étant empêché par les tronçons de chemin de câble eux-mêmes, et donc impossible.

Il n'en est pas de même avec l'éclisse suivant l'invention.

Les caractéristiques et avantages de l'invention ressortiront d'ailleurs de la description qui va suivre, à titre d'exemple, en référence aux dessins schématiques annexés sur lesquels :
la figure 1 est une vue en perspective partielle de deux tronçons de chemin de câble en fils soudés reliés bout à bout par des éclisses suivant l'invention ;
la figure 2 reprend, à échelle supérieure, le détail de la figure 1 repéré par un encart II sur cette figure 1 ;
la figure 3 est une vue en élévation d'une éclisse suivant l'invention, suivant la flèche III de la figure 2, avant sertissage des languettes pliables qu'elle comporte ;
la figure 4 en est une vue en coupe transversale, suivant la ligne IV-IV de la figure 3 ;
la figure 5 en est une vue partie en plan, partie en coupe longitudinale, suivant la ligne brisée V-V de la figure 3 ;
la figure 6 est une vue en plan d'un outil de nature à faciliter, si désiré, la mise en place d'une telle éclisse ;
la figure 7 est une vue en élévation de cet outil, suivant la flèche VII de la figure 6 ;
la figure 8 reprend, à échelle supérieure, le détail de la figure 6 repéré par un encart VIII sur cette figure 6 ;
les figures 9A, 9B, 9C sont des vues partielles en coupe longitudinale d'une éclisse suivant l'invention illustrant diverses phases successives de son sertissage sur l'un des fils transversaux d'un des tronçons de chemin de câble à assembler.

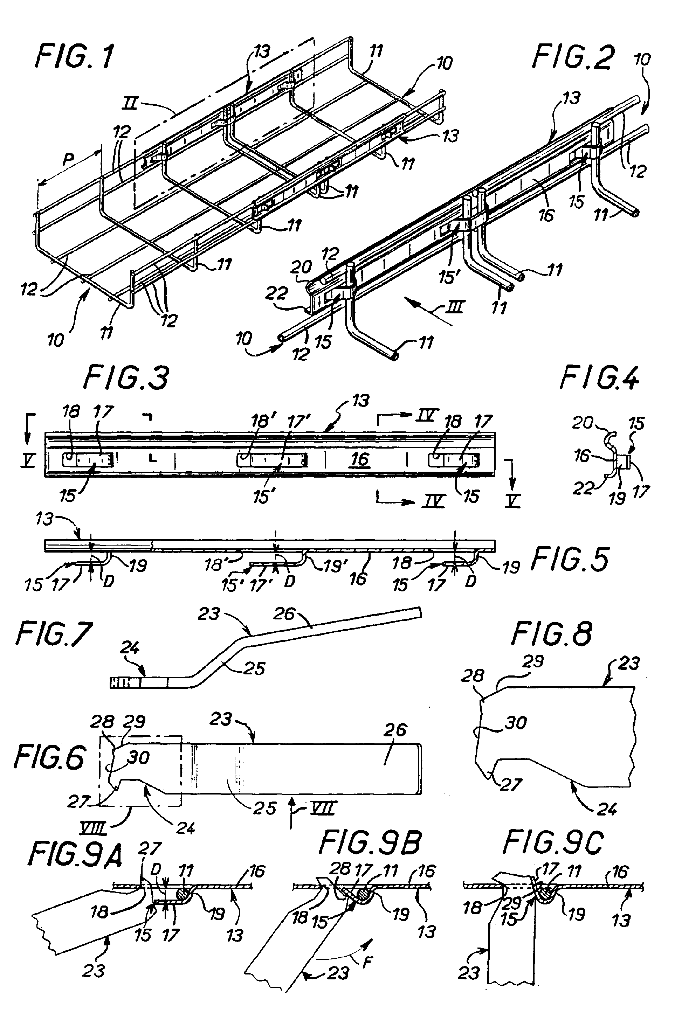

Tel qu'illustré par la figure 1, il s'agit, globalement, d'assembler bout à bout deux tronçons de chemin de câble 10 en fils soudés.

Ces deux tronçons de chemin de câble 10, qui sont de même nature, comportent chacun une pluralité de fils transversaux 11, qui, parallèles les uns aux autres, sont établis à distance les uns des autres, suivant en pratique un pas P régulier, et qui, par soudage, sont reliés les uns aux autres par une pluralité de fils longitudinaux 12, eux-mêmes établis parallèlement les uns aux autres, à distance les uns des autres.

Dans la forme de mise en oeuvre représentée, il y a ainsi trois fils longitudinaux 12 sur la partie médiane des fils transversaux 11, et deux fils longitudinaux 12 sur chacune de leurs ailes, avec l'un de ces fils longitudinaux 12 établi à niveau avec l'extrémité de ces dernières, et tous les fils longitudinaux 12 interviennent à l'extérieur des fils transversaux 11.

Ces dispositions étant bien connues par elles-mêmes, et ne relevant pas en propre de la présente invention, elles ne seront pas décrites plus en détail ici.

De manière également connue en soi, il est mis en oeuvre, pour relier l'un à l'autre les deux tronçons de chemin de câble 10, deux éclisses 13, à raison d'une pour chacune de leurs ailes.

Suivant l'invention, chacune des éclisses 13 ainsi mises en oeuvre présente, en saillie, longitudinalement à distance l'une de l'autre, au moins deux languettes pliables 15, qui, allongées longitudinalement, sont propres, ainsi qu'il apparaîtra ci-après, à son agrafage, par sertissage, sur des fils transversaux 11 des deux tronçons de chemin de câble 10 à assembler bout à bout.

Dans la forme de réalisation représentée, une telle éclisse 13 se présente sous la forme générale d'une barrette allongée, de contour globalement quadrangulaire, et elle comporte, longitudinalement à distance l'une de l'autre, trois languettes pliables, à savoir, outre deux languettes pliables d'extrémité 15, une languette pliable centrale 15′ dont la longueur est supérieure à celle des deux précédentes.

Toutes ces languettes pliables 15, 15′ sont allongées longitudinalement dans le même sens, parallèlement à la platine 16 de l'éclisse 13 sur laquelle elles font saillie, et leur partie courante 17, 17′, libre, est établie à une même distance D de cette platine 16.

En outre, et tel que représenté, chacune de ces languettes pliables 15, 15′ est établie au droit d'un évidement 18, 18′ propre à son repliement.

En pratique, il s'agit d'un crevé à la faveur duquel a été formée, par découpe et emboutissage, la languette pliable 15, 15′ correspondante et, par une racine 19, 19′, celle-ci se rattache d'un seul tenant à l'un des bords transversaux d'extrémité de ce crevé.

En plan, chaque languette pliable 15, 15′ a un contour globalement rectangulaire, et il en est de même pour l'évidement 18, 18′ dont elle est issue.

Dans la forme de réalisation représentée, l'éclisse 13 suivant l'invention présente, le long de son bord supérieur, sur toute la longueur de celui-ci, un rebord roulé 20, à section transversale globalement hémi-circulaire, dont la concavité est tournée du côté de ses languettes pliables 15, 15′, et par lequel elle est apte à épouser localement les fils longitudinaux 12 correspondants des tronçons de chemin de câble 10 à assembler.

En outre, dans cette forme de réalisation, l'éclisse 13 suivant l'invention présente, le long de son bord inférieur, un retour en équerre 22 dirigé en sens opposé par rapport à ses languettes pliables 15, 15′, et, comme le rebord roulé 20, ce retour en équerre 22 s'étend sur toute sa longueur.

En pratique, l'éclisse 13 ainsi constituée peut avantageusement être réalisée en acier doux, et, par exemple, en acier doux galvanisé en bande, en venant alors directement de forge, sans qu'il lui soit appliqué un quelconque traitement thermique ni un quelconque traitement de surface après sa découpe.

Mais, en variante, elle peut également être réalisée en un quelconque autre matériau, tel que, par exemple, acier inoxydable ou aluminium.

Si désiré, il peut être mis en oeuvre, pour faciliter la mise en place de cette éclisse 13, un outil 23 particulier.

Dans la forme de réalisation représentée sur les figures 6 à 8, cet outil 23, qui se présente sous la forme générale d'une plaquette convenablement découpée et pliée, comporte, d'un seul tenant, une tête 24, qui en constitue la partie active, et, raccordé à cette tête 24 par un tronçon de liaison oblique 25, un manche 26, qui s'étend lui-même légèrement en oblique par rapport à la tête 24.

Quoi qu'il en soit, cet outil 23 comporte, sur sa tête 24, d'une part, un bec 27, par lequel, par exemple, il est apte à prendre appui sur le bord de l'évidement 18, 18′ au droit duquel est établie la languette pliable 15, 15′ à sertir, en se crochetant sur cet évidement 18, 18′, du côté opposé à une telle languette pliable 15, 15′, et, d'autre part, du côté opposé à ce bec 27, une saillie 28, par laquelle il est alors apte à venir porter sur cette languette pliable 15, 15′, après contournement de celle-ci, et qui est elle-même suivie d'une portée oblique 29.

En pratique, dans la forme de réalisation représentée, le bec 27 et la saillie 28 sont chacun respectivement disposés aux extrémités de la tranche transversale d'extrémité 30 de la tête 24 et celle-ci s'étend légèrement en oblique par rapport à la normale à la direction d'allongement de l'ensemble.

Pour sa mise en place, l'éclisse 13 suivant l'invention est d'abord appliquée de l'extérieur contre les tronçons de chemin de câble 10 à assembler.

Elle est ensuite coulissée longitudinalement le long de ces tronçons de chemin de câble 10, jusqu'à engagement de ses languettes pliables 15, 15′ sur les fils transversaux 11 correspondants de ces tronçons de chemin de câble 10.

Il est alors procédé à leur sertissage autour de ces fils transversaux 11.

Ce sertissage peut être effectué à l'aide d'un simple tournevis.

Mais, tel qu'illustré par les figures 9A, 9B et 9C, il peut également être mis en oeuvre, pour ce faire, si désiré, l'outil 23 précédemment décrit.

Par exemple, et tel que représenté, cet outil 23 est mis en oeuvre de l'intérieur des tronçons de chemin de câble 10 à relier.

Dans un tel cas, cet outil 23 est, dans un premier temps, et tel que représenté sur la figure 9A, crocheté, par son bec 27, sur le bord transversal de l'évidement 18, 18′ correspondant à la languette 15, 15′ à sertir opposé à cette languette 15, 15′.

Dans un deuxième temps, il est pivoté autour de ce bord transversal, en direction de la languette 15, 15′, suivant la flèche F de la figure 9B.

L'outil 23 vient alors porter par sa saillie 28 sur la languette 15, 15′ à sertir, et, plus précisément, sur la partie courante 17, 17′ de cette languette 15, 15′, après contournement de celle-ci.

Dans un troisième temps, le pivotement de l'outil 23 étant poursuivi, cet outil 23 vient agir par sa portée 29 sur la languette 15, 15′.

Ainsi qu'on le notera, il en résulte que cette languette 15, 15′ s'engage dans l'évidement 18, 18′ correspondant, et qu'ainsi elle est dirigée vers l'extérieur, en pratique sensiblement perpendiculairement à la platine 16 dont elle est issue.

Il en résulte que, comme il ressort de la figure 2, les saillies que forment les extrémités libres des languettes 15, 15′ une fois celles-ci pliées se situent avantageusement à l'extérieur, sans, donc, interférer avec le volume interne des tronçons de chemin de câble 10.

Il en résulte également que, comme visible sur la figure 9C, le fil transversal 11 sur lequel est engagée une telle languette 15, 15′ se trouve entouré sur la quasi totalité de sa section, d'un côté par cette languette 15, 15′, de l'autre par la partie courante de l'éclisse 13.

En variante, et suivant un mode de mise en oeuvre non représenté, l'outil 23 peut être mis en oeuvre de l'extérieur des tronçons de chemin de câble 10 à assembler.

Il se crochette alors par son bec 27 sur la languette 15, 15′ à sertir, en prenant appui par sa saillie 28 sur le bord opposé de l'évidement 18, 18′ correspondant.

Si désiré, il peut aussi bien être mis en oeuvre une éclisse sur le fond des tronçons de chemin de câble à assembler.

## Revendications

1. Eclisse pour chemin de câble en fils soudés du genre comportant, en saillie, au moins deux languettes pliables (15), qui sont allongées longitudinalement, à distance l'une de l'autre, et dont chacune est propre à son agrafage par sertissage sur un fil transversal (11) d'un des deux tronçons de chemin de câble (10) à assembler bout à bout, caractérisée en ce que chacune des languettes pliables (15) qu'elle présente est établie au droit d'un évidement (18, 18') propre à son repliement.

2. Eclisse suivant la revendication 1, caractérisée en ce qu'elle comporte, longitudinalement à distance l'une de l'autre, trois languettes pliables (15, 15′).

3. Eclisse suivant la revendication 2, caractérisée en ce que la longueur de sa languette pliable centrale (15′) est supérieure à celle des deux autres.

4. Eclisse suivant l'une quelconque des revendications 1 à 3, caractérisée en ce que les languettes pliables (15, 15′) qu'elle comporte sont toutes allongées longitudinalement dans le même sens.

5. Eclisse suivant l'une quelconque des revendications 1 à 4, caractérisée en ce qu'elle présente, le long de son bord supérieur, un rebord (20), à section transversale globalement hémi-circulaire, dont la concavité est tournée du côté de ses languettes pliables (15, 15′), et par lequel elle est apte à épouser localement les fils longitudinaux (12) correspondants des tronçons de chemin de câble (10) à assembler.

6. Eclisse suivant l'une quelconque des revendications 1 à 5, caractérisée en ce que, présentant, le long de son bord inférieur, un retour en équerre (22) dirigé en sens opposé par rapport à ses languettes pliables (15, 15′), ce retour en équerre (22) s'étend sur toute sa longueur.

7. Eclisse suivant l'une quelconque des revendications 1 à 6, caractérisée en ce qu'elle est réalisée en un quelconque des matériaux suivants : acier doux, qui, éventuellement, est protégé ; acier inoxydable ; aluminium.

8. Procédé pour la mise en place d'une éclisse (13) conforme à l'une quelconque des revendications 1 à 7, caractérisé en ce qu'il consiste à appliquer de l'extérieur cette éclisse (13) contre les tronçons de chemin de câble (10) à assembler, à la faire coulisser longitudinalement le long de ceux-ci jusqu'à engagement de ses languettes pliables (15, 15′) sur des fils transversaux (11) de ces tronçons de chemin de câble (10), et à sertir ces languettes pliables (15, 15′) autour de ces fils transversaux (11).

9. Procédé suivant la revendication 8, caractérisé en ce que le sertissage de ses languettes pliables (15, 15′) est conduit de manière à ce que ces languettes pliables (15, 15′) s'engagent dans les évidements (18, 18′) au droit desquels elles sont établies et soient ainsi dirigées vers l'extérieur.

10. Outil propre à faciliter si désiré la mise en place d'une éclisse (13) conforme à l'une quelconque des revendications 1 à 7, caractérisé en ce que, pour le sertissage d'une languette pliable (15, 15′) de cette éclisse (13), il comporte un bec (27), par lequel il est apte, soit à prendre appui sur le bord de l'évidement (18, 18′) au droit duquel est établie cette languette pliable (15, 15′) en se crochetant sur cet évidement (18, 18′), soit à se crocheter sur une telle languette pliable (15, 15′), et, du côté opposé à ce bec (27), une saillie (28), par laquelle il est apte, soit à venir porter sur cette languette pliable (15, 15′), après contournement de celle-ci, soit à prendre appui sur ledit bord de l'évidement (18, 18′) correspondant, et qui est elle-même suivie d'une portée oblique (29).

11. Outil suivant la revendication 10, caractérisé en ce que le bec (27) et la saillie (28) sont chacun respectivement disposés aux extrémités d'une tranche (30) qui s'étend légèrement en oblique.

## Claims

1. A connector for a cableway of welded wires of the kind comprising, in projecting relationship, at least two bendable tongue portions (15) which are elongate longitudinally at a spacing from each other and each of which is adapted for latching thereof by crimping on a transverse wire (11) of one of the two cableway portions (10) to be assembled end-to-end, characterised in that each of the bendable tongue portions (15) that it has is disposed in line with an opening (18, 18′) adapted for bending same.

2. A connector according to claim 1 characterised in that it comprises three bendable tongue portions (15, 15′) longitudinally at a spacing from each other.

3. A connector according to claim 2 characterised in that the length of the central bendable tongue portion (15′) is greater than that of the other two.

4. A connector according to any one of claims 1 to 3 characterised in that the bendable tongue portions (15, 15′) that it has are all elongate longitudinally in the same direction.

5. A connector according to any one of clairns 1 to 4 characterised in that, along its upper edge, it has a rim (20) of generally semicircular cross-section, the concavity of which is towards its bendable tongue portions (15, 15′) and by virtue of which it is capable of locally fitting to the corresponding longitudinal wires (12) of the cableway portions (10) to be assembled.

6. A connector according to any one of clairns 1 to 5 characterised in that, having along its lower edge a right-angle bend portion (22) directed in the opposite direction with respect to its bendable tongue portions (15, 15′), said right-angle bend portion (22) extends over its entire length.

7. A connector according to any one of claims 1 to 6 characterised in that it is made of any one of the following materials: mild steel which is possibly protected; stainless steel; and aluminium.

8. A process for fitting a connector (13) according to any one of claims 1 to 7 characterised in that it ccmprises applying said connector (13) from the outside against the cableway portions (10) to be assembled, sliding it longitudinally along same until its bendable tongue portions (15, 15′) engage on transverse wires (11) of said cableway portions (10), and crimping said bendable tongue portions (15, 15′) around said transverse wires (11).

9. A process according to claim 8 characterised in that the crimping of its bendable tongue portions (15, 15′) is effected in such a way that said bendable tongue portions (15, 15′) engage into the openings (18, 18′), in line with which they are disposed, and are thus directed outwardly.

10. A tool for facilitating if desired the fitting of a connector (13) according to any one of claims 1 to 7 characterised in that, for crimping a bendable tongue portion (15, 15′) of said connector (13), it comprises a beak (27) by means of which it is capable either of bearing against the edge of the opening (18, 18′) in line with which said bendable tongue portion (15, 15′) is disposed, while hooking on to said opening (18, 18′), or hooking on to such a bendable tongue portion (15, 15′) and, on the side opposite to said beak (27), a projection (28) by which it is capable either of coming to bear against said bendable tongue portion (15, 15′) after it has been turned over or bearing against said edge of the corresponding opening (18, 18′), and which is itself followed by an inclined surface (29).

11. A tool according to claim 10 characterised in that the beak (27) and the projection (28) are each disposed at the respective ends of an edge face (30) which extends slightly obliquely.

## Patentansprüche

1. Verbinder für eine Kabelrinne aus verlötetem/verschweißtem Metalldrahtgitter, der mindestens zwei vorspringende biegbare Klammern (15) aufweist, die sich gegenseitig beabstandet in Längsrichtung erstrecken und von denen jede zur Klammerung mittels Biegen um einen transversalen Drant (11) eines von zwei endseitig aneinanderzufügenden Abschnitten der Kabelrinne (10) geeignet ist, dadurch gekennzeichnet, daß jede der biegbaren Klammern (15) des Verbinders nahe einer zum Umbiegen der Klammer vorgesehenen Aussparung (18, 18′) angeordnet ist.

2. Verbinder nach Anspruch 1, dadurch gekennzeichnet, daß er in Längsrichtung in jeweils gleichem Abstand drei biegbare Klammern (15, 15′) aufweist.

3. Verbinder nach Anspruch 2, dadurch gekennzeichnet, daß die Länge seiner mittleren biegbaren Klammer (15′) größer als die Länge der zwei anderen Klammern ist.

4. Verbinder nach einem der Ansprüche 1 bis 3, dadurch gekennzeichnet, daß die biegbaren Klammern (15, 15′), die er aufweist, sich allesamt längs in die gleiche Richtung erstrecken.

5. Verbinder nach einem der Ansprüche 1 bis 4, dadurch gekennzeichnet, daß er auf der Länge seiner oberen Kante eine im gesamten Querschnitt halbkreisförmige Einfassung (20) aufweist, deren konkave Wölbung auf die Seite seiner biegbaren Klammern (15, 15′) gerichtet ist und durch die er die entsprechenden Längsdrähte (12) der zusammenzufügenden Abschnitte der Kabelrinne (10) räumlich umfassen kann.

6. Verbinder nach einem der Ansprüche 1 bis 5, dadurch gekennzeichnet, daß er auf der Länge seiner unteren Kante eine in entgegengesetzter Richtung zu seinen biegbaren Klammern (15, 15′) orientierte abgewinkelte Leiste (22) aufweist und diese abgewinkelte Leiste (22) sich auf seine ganze Länge erstreckt.

7. Verbinder nach einem der Ansprüche 1 bis 6, dadurch gekennzeichnet, daß er aus einem der folgenden Materialien hergestellt ist: Flußstahl, der gegebenenfalls geschützt ist; rostfreier Stahl; Aluminium.

8. Verfahren zum Einsetzen eines Verbinders (13) nach einem der Ansprüche 1 bis 7, dadurch gekennzeichnet, daß der Verbinder (13) von außen an die zusammenzufügenden Abschnitte der Kabelrinne (10) angesetzt wird, er an diesen gleitend verschoben wird, bis seine biegbaren Klammern (15, 15′) an den transversalen Drähten (11) der Abschnitte der Kabelrinne (10) eingreifen, und die biegbaren Klammern (15, 15′) um die transversalen Drähte (11) herumgebogen werden.

9. Verfahren nach Anspruch 8, dadurch gekennzeichnet, daß das Biegen seiner biegbaren Klammern (15, 15′) derart durchgeführt wird, daß diese biegbaren Klammern (15, 15′) in die Aussparungen (18, 18′) eingreifen, in deren Nähe sie angeordnet sind, und folglich nach außen gerichtet sind.

10. Werkzeug zur Erleichterung, falls gewünscht, des Einsetzens eines Verbinders (13) nach einem der Ansprüche 1 bis 7, dadurch gekennzeichnet, daß es zum Biegen einer biegbaren Klammer (15, 15′) dieses Verbinders (13) eine Nase (27) aufweist, durch die es entweder auf dem Rand der Aussparung (18, 18′), nahe der diese biegbare Klammer (15, 15′) angeordnet ist, Halt finden kann, indem es sich in dieser Aussparung (18, 18′) einhakt, oder sich an einer solchen biegbaren Klammer (15, 15′) einhaken kann, und daß es ferner auf der dieser Nase (27) gegenüberliegenden Seite einen Vorsprung (28) aufweist, durch den es entweder auf dieser biegbaren Klammer (15, 15′) nach Verdrehung aufliegen kann, oder auf dem Rand der zugehörigen Aussparung (18, 18′) Halt finden kann, und an den sich ein schräger Abschluß (29) anschließt.

11. Werkzeug nach Anspruch 10, dadurch gekennzeichnet, daß sowohl die Nase (27) als auch der Vorsprung (28) jeweils an den äußersten Enden eines Abschnitts (30) angeordnet sind, der sich leicht schräg erstreckt.
